Europäisches Patentamt

European Patent Office

Office européen des brevets

(19)

(11) Publication number:

**0 072 145**
**A1**

(12) **EUROPEAN PATENT APPLICATION**

(21) Application number: 82303977.1

(22) Date of filing: 28.07.82

(51) Int. Cl.³: **C 09 K 5/04**

(30) Priority: 29.07.81 DE 3129799

(43) Date of publication of application: 16.02.83
Bulletin 83/7

(84) Designated Contracting States: FR GB SE

(71) Applicant: The British Petroleum Company p.l.c.,
Britannic House Moor Lane, London EC2Y 9BU (GB)

(72) Inventor: Veltwisch, Dieter, Deutsche BP
Aktiengesellschaft Postfach 60 03 40,
D-2000 Hamburg 60 (DE)
Inventor: Wohlisch, Klaus, Deutsche BP
Aktiengesellschaft Postfach 60 03 40,
D-2000 Hamburg 60 (DE)

(74) Representative: MacLeod, Malcolm et al, BP
INTERNATIONAL LIMITED Patents and Licensing
Division Chertsey Road, Sunbury-on-Thames Middlesex,
TW16 7LN (GB)

(54) **Refrigerator and/or heat pump working fluids.**

(57) A refrigerant for a refrigerating machine, ie, a refrigerator or a heat pump, comprises an azeotrope of water, an alcohol containing not more than 6 carbon atoms and, preferably, an ether, most preferably one corresponding to the alcohol. The refrigerant is suitable for use in compression machines. When combined with an aqueous solution containing a salt of a metal conventionally used in absorption machines, it may be used in the latter.

EP 0 072 145 A1

1

## REFRIGERATOR AND/OR HEAT PUMP WORKING FLUIDS

This invention relates to a refrigerant suitable for use in refrigerating machines. When such machines are used for cooling they are termed refrigerators, when they are used for extracting heat they are termed heat pumps.

Two types of refrigerating machines are commonly available - compression machines and absorption machines.

In a compression machine the working fluid, known as the refrigerant, works on a cycle in which it is alternatively compressed and liquified, thus giving up heat to its surroundings, and expanded and vaporised, thus abstracting heat from its surroundings.

In an absorption machine the working fluid is a mixture of an absorbent and absorbate. The absorbent is usually an aqueous solution containing certain inorganic salts and the absorbate, the refrigerant in this case, is a volatile fluid. Cooling is achieved by evaporating the liquid refrigerant in an evaporator. The vaporised refrigerant is then passed to an absorber where it is absorbed in the absorbent with liberation of heat. The solution of absorbent and absorbate subsequently flows to a generator which is heated to drive off refrigerant in the vapour form. The absorbent solution which still contains a little refrigerant then returns to the generator. The vaporised refrigerant is condensed by heat exchange with an external coolant and the liquid refrigerant returns to the evaporator to begin another cycle.

DT-OS 2644474 is concerned with working fluids containing lower alcohols, water and inorganic salts.

1

0072145

DT-OS 2852312 covers working fluids containing $C_{1-3}$ amines or alcohols, water and inorganic salts.

DT-OS 2856767 describes working fluids containing $C_{1-2}$ amines and ammonia or water and absorber solutions containing water, glycol and inorganic salts.

None of these discloses the use of an azeotrope, however.

The International Organisation of Standardisation publication ISO 817-1974-E lists certain azeotropic mixtures of halogenated hydrocarbons as refrigerants.

We have now discovered that the combination of a substance which forms an azeotrope with water is advantageous for various reasons. Refrigerants containing water make use of the high evaporation enthalpy of water. Furthermore, by using a suitable combination of substances the working range can be extended and the beneficial properties of the individual substances can be combined with each other. Moreover, as compared with water as a working fluid, the freezing point of the fluid can be lowered. Finally, azeotropes have a uniform boiling point, so that no fractionation or rectification is necessary.

Azeotropes according to the invention usually possess a boiling point minimum as against the individual components. As a result of this the refrigerant has a higher vapour pressure at given temperatures and given pressures compared with the individual components, which has an advantageous effect for the evaporation. However, azeotropes may also be used which have a boiling point maximum. As a result of this in certain cases the advantage of a higher condensation temperature may be achieved at given pressure on the condenser side.

According to the present invention there is provided a refrigerating machine containing a refrigerant comprising an azeotrope of water and an azeotrope-forming alcohol containing not more than 6 carbon atoms per molecule.

Suitable alcohols include ethanol, n-propanol and isopropanol.

Preferably the refrigerant also contains an ether containing 2-12 carbon atoms per molecule.

Most preferably the ether used corresponds to the alcohol used in the refrigerant. This has the added advantage that a side reaction which often occurs in such refrigerants, namely the dehydration of the alcohol to the either, can be suppressed by influencing the chemical equilibrium.

Suitable ternary azeotropic systems include: isopropanol / isopropyl ether/water; propanol/propyl ether/water; 1-butanol/butyl ether/water; and 2-butanol/butyl ether/water.

The above refrigerants are suitable for use in compression and absorption type machines. For the latter, the refrigerant is preferably used in combination with an aqueous solution of a salt conventionally used in adsorption type machines. Such salts are used to increase the absorptive power of the alkali and alkaline earth metals and zinc. The preferred halides are chlorides, bromides and iodides and the preferred metals are lithium, magnesium and calcium.

Claims:

1. A refrigerating machine containing a refrigerant characterised by the fact that the refrigerant comprises an azeotrope of water and an azeotrope-forming alcohol containing not more than 6 carbon atoms per molecule.

2. A refrigerating machine according to claim 1 comprising additionally an azeotrope-forming ether containing 2 to 12 carbon atoms per molecule.

3. A refrigerating machine according to either of the preceding claims wherein the ether corresponds to the alcohol present in the refrigerant.

4. A refrigerating machine according to any of the preceding claims wherein the refrigerant is in combination with an aqueous solution of a metallic salt.

5. A refrigerating machine according to claim 4 wherein the metallic salt is a halide or thiocyanate of an alkali or alkaline earth metal or zinc.

**EUROPEAN SEARCH REPORT**

0072145
Application number

EP 82 30 3977

## DOCUMENTS CONSIDERED TO BE RELEVANT

| Category | Citation of document with indication. where appropriate. of relevant passages | Relevant to claim | CLASSIFICATION OF THE APPLICATION (Int. Cl. ³) |
|---|---|---|---|
| | --- | | C 09 K  5/04 |
| A | FR-A-2 281 417 (MASCHINENFABRIK AUGSBURG-NURNBERG) *Claims 1,2* & GB - A - 1 496 915 | 1 | |
| | --- | | |
| A | FR-A-2 336 551 (MASCHINENFABRIK AUGSBURG-NURNBERG) *Claim 1* | 1,2 | |
| | ----- | | |

TECHNICAL FIELDS SEARCHED (Int. Cl. ³)

C 09 K
F 24 J

The present search report has been drawn up for all claims

| Place of search | Date of completion of the search | Examiner |
|---|---|---|
| THE HAGUE | 04-11-1982 | NICOLAS H.J.F. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82